# FASCICULE DE BREVET EUROPEEN

(11) **EP 1 813 052 B1**
(45) Date de publication et mention de la délivrance du brevet: **12.06.2013**
(21) Numéro de dépôt: 05809143.0
(22) Date de dépôt: 14.10.2005
(51) Int. Cl.: H04L 9/32

(54) **Procédé de sécurisation de transactions effectuées à distance sur un réseau de communication ouvert**
Verfahren zur Sicherung entfernt durchgeführter Transaktionen in einem offenen Kommunikationsnetzwerk
Method of securing transactions performed remotely over an open communication network

(30) Priorité: 22.10.2004 FR 0452417
(43) Date de publication de la demande: 01.08.2007
(73) Titulaire: Paycool Development, 34000 Montpellier (FR)
(72) Inventeur: BERGSTEN, Ulrik, F-94210 La Varenne (FR)
(74) Mandataire: Scheer, Luc
(86) Numéro de dépôt international: PCT/FR2005/002548
(87) Numéro de publication internationale: WO 2006/045917

(56) Documents cités:
- WO-A-03/019343
- US-A- 5 949 882
- US-A- 6 134 661
- US-A1- 2002 066 039
- MENEZES, VASTONE, OORSCHOT: "Handbook of Applied Cryptography" 1997, CRC PRESS LLC , USA , XP002321837 page 39 page 559 - page 561 page 405 - page 410

## Description

L'invention concerne un procédé de sécurisation de transactions effectuées à distance sur un réseau de communication ouvert.

### Introduction

Pour contrer le sida même sans arriver encore à guérir cette maladie redoutable, la médecine a mis en oeuvre une tri thérapie, c'est à dire un cocktail de trois médicaments : aucun médicament n'y suffit seul, seule la combinaison des trois permet de résister au mal.

Le simple fait de se connecter à Internet expose tout utilisateur à des attaques virales qui sont souvent sous-estimées, difficilement détectables et encore plus difficilement contrées.

Par comparaison un peu osée, on peut donc considérer que tous les internautes sont potentiellement des « séropositifs » de l'Internet.

### Problématique de l'authentification forte

Authentifier au sens fort signifie qu'on constate qu'un utilisateur participe personnellement à une transaction ou en tout cas qu'il est réputé y participer sans possibilité de contestation autrement qu'en démontrent le contraire.

La tactique de fraude consistant à déjouer une solution d'authentification plus ou moins forte est appelée « usurpation d'identité ».

Résister aux tactiques d'usurpation d'identité ne suffit pas pour sécuriser une session ou une transaction : encore faut-il s'assurer que l'action de l'utilisateur n'est pas modifiée, c'est à dire qu'un fraudeur en position d'intermédiaire entre l'utilisateur et le serveur n'est pas capable de poursuivre seul la session avec le serveur ou de modifier une requête de l'utilisateur contre la volonté de celui-ci.

Quant on n'arrive pas à usurper l'identité d'une victime, il reste possible de tenter une tactique d' « intermédiation dolosive ».

Enfin, si on n'arrive pas non plus à mettre en oeuvre une telle tactique d'intermédiation dolosive, on peut effectuer une transaction et ensuite la contester en faisant preuve de mauvaise foi : tactique de la « contestation abusive ».

Les enjeux sécuritaires sont de résister :
- aux actions de tiers susceptibles d'entraîner une divulgation d'informations confidentielles et / ou une exécution d'ordres
- aux contestations abusives.

On connait dans l'état de la technique, des solutions très partielles à la problématique exposée ci-dessus.

Ainsi, on connait par le US 6,134,661 (William C. Topp) un procédé de sécurisation de transactions effectuées à l'aide d'un PC sur un réseau ouvert, dans lequel le clavier du PC est pourvu d'un circuit d'encryptage permettant d'encrypter sélectivement la saisie d'un mot de passe.

On connaît par ailleurs de façon générale, à partir du « Handbook of Applied Cryptography » de Menezes, Vanstone, Oorschot, 1997, CRC Press LLC, USA, XP002321837, l'authentification basée sur l'usage de certificats numériques.

Présentation de la solution de « tri thérapie »

L'objectif de la présente solution est de résister aux tentatives d'usurpation d'identité et d'intermédiation dolosive et ceci sans utiliser de matériel autre que ce qui est disponible en standard sur un ordinateur individuel (typiquement un PC sous le système d'exploitation de type Windows).

La présente invention concerne un procédé de sécurisation des transactions effectuées à distance sur un réseau de communication ouvert, notamment de type Internet, par un utilisateur disposant d'un équipement informatique. Le procédé comprend :
- une étape de brouillage d'informations saisies par l'utilisateur au moyen du clavier de l'équipement informatique,
- une étape d'authentification de l'utilisateur auprès d'un serveur distant au moyen d'un module logiciel gestionnaire de certificat,
- une étape de mise en oeuvre d'un mot de passe dynamique, notamment déterminé au moyen d'une carte matricielle d'authentification.

Le procédé selon l'invention est caractérisé en ce que l'étape de brouillage d'informations saisies par l'utilisateur au moyen du clavier de l'équipement informatique comprend :
- l'étape de simuler des séquences de frappes du clavier au sein de l'équipement informatique,
- l'étape, pour l'utilisateur, d'effectuer une séquence de frappe du clavier correspondant à un mot de passe personnel,
- l'étape de détecter le mot de passe personnel en discriminant entre les séquences de frappe du clavier simulées et la séquence de frappe du clavier correspondant au mot de passe personnel de l'utilisateur.

De préférence, selon l'invention, le procédé est tel que l'étape d'authentification de l'utilisateur auprès d'un serveur distant comprend, pour le module logiciel gestionnaire de certificat:
- l'étape d'afficher une fenêtre active sur un écran de visualisation de l'équipement informatique,
- l'étape d'établir une session sécurisée, notamment de type TLS, destinée à permettre une identification mutuelle du serveur distant et de l'utilisateur, représenté par un certificat,
- l'étape d'activer l'étape de brouillage d'informations saisies par l'utilisateur au moyen du clavier de l'équipement informatique et d'afficher, sous forme graphique, un code aléatoire destiné à être saisi par l'utilisateur pour démontrer sa qualité d'être humain.

Le procédé est tel que l'étape d'authentification de l'utilisateur auprès d'un serveur distant comprend en outre :
- l'étape, pour l'utilisateur, de lire le code aléatoire ainsi affiché et de saisir le code aléatoire et le mot de passe personnel au moyen du clavier de l'équipement informatique,
- l'étape, pour le module logiciel gestionnaire de certificat, de désactiver l'étape de brouillage,
- l'étape, pour le module logiciel gestionnaire de certificat, de vérifier la validité du code aléatoire et de transmettre au serveur distant le mot de passe personnel,
- l'étape, pour le serveur distant, de comparer le mot de passe personnel ainsi transmis avec le mot de passe correspondant au certificat de l'utilisateur mémorisé dans une base de données de certificats associée au serveur distant.

De préférence, selon l'invention, le procédé est tel que l'étape d'authentification de l'utilisateur auprès d'un serveur distant comprend pour le module logiciel qestionnaire de certificats, l'étape d'afficher des données dans la fenêtre active, notamment la date, l'heure et le lieu de la dernière utilisation du certificat, les données étant communiquées par le serveur.

De préférence, selon l'invention, le procédé est tel que l'étape de mise en oeuvre d'un mot de passe dynamique comprend :
- L'étape, pour l'utilisateur, de communiquer au serveur distant un identifiant, notamment de type alphanumérique,
- l'étape, pour le serveur distant, de communiquer à l'utilisateur un défi,
- l'étape, pour l'utilisateur, en mettant en oeuvre la matrice de la carte matricielle, de déterminer une réponse au défi,
- l'étape, pour l'utilisateur, de transmettre au serveur distant la réponse ainsi déterminée et le mot de passe personnel,
- l'étape, pour le serveur distant, de comparer le mot de passe personnel ainsi transmis avec le mot de passe mémorisé dans la base de données et de contrôler la réponse associée à l'identifiant, et mémorisée dans la base de données.

De préférence selon l'invention, le mot de passe dynamique est déterminé au moyen d'une carte matricielle d'authentification, ou au moyen d'une calculette fonctionnant en mode challenge/réponse. Avantageusement, la calculette est autonome ou fonctionne en association avec une carte à puce contenant les données de personnalisation relatives à l'utilisateur, notamment les secrets nécessaires au contrôle du mot de passe et à la génération de la réponse au challenge.

En matière de sécurisation des transactions à distance sur réseaux ouverts de type Internet, la solution consiste à s'inspirer de cette image de la tri thérapie. D'où effectivement trois mesures complémentaires à combiner pour résister efficacement aux dangers de l'Internet :
- on brouillage de la saisie clavier,
- une mise en oeuvre d'un certificat via un gestionnaire de certificat et un tiers de confiance,
- un challenge / réponse basée sur une carte matricielle et un mot de passe.

Cette solution ne met en oeuvre aucun matériel au-delà du PC de l'utilisateur, si ce n'est la carte matricielle qui n'est toutefois qu'un imprimé très peu coûteux à produire et à distribuer.

### Evolutivité de la tri thérapie (sécurité encore renforcée)

S'il s'avère nécessaire de renforcer encore la sécurité ou si certains utilisateurs devaient rejeter cette solution de base (trop compliquée, contraignante ou n'inspirant pas suffisamment confiance), il est possible sélectivement (certains utilisateurs, certains types de transactions) ou même globalement d'adopter une solution avancée et ceci sans aucun impact sur les applications : la carte matricielle est simplement remplacée par une calculette fonctionnant en mode challenge / réponse.

Ces calculettes peuvent être autonomes ou fonctionner en association avec une carte à puce contenant les données de personnalisation relative à l'utilisateur dont notamment les secrets nécessaires au contrôle du mot de passe et à la génération de la réponse au challenge.

La solution est telle que la cohabitation des deux modes est possible tout comme une migration du mode de base vers le mode avancé en cas de généralisation progressive selon la logique suivante :
- si l'utilisateur est doté d'une calculette alors le mode avancé s'impose à lui,
- sinon on peut se contenter du mode de base.

C'est possible parce que toute authentification implique le tiers de confiance qui connaît la situation de chaque utilisateur et peut donc effectuer le contrôle d'authentification qui y correspond.

Capacité de nomadisme de la tri thérapie (utilisation à partir de plusieurs PC)

La solution nécessite l'installation sur chaque PC utilisé du logiciel de gestion de certificats contenant notamment le certificat de l'utilisateur.

Des fonctions d'exportation et d'importation via le tiers de confiance permettent à l'utilisateur de protéger d'autres PC à partir d'un premier PC.

Universalité de la tri thérapie (utilisation en multi-canal)

La solution permet une authentification forte sur Internet, modèle même de réseau ouvert, mais sous une forme dégradée, elle est également utilisable sur les canaux de type réseaux fermés dont notamment :
- le Léléphone fixe ou mobile,
- le minitel.

Les possibilités d'écoute et d'intermédiation dolosives étant très nettement moindres que sur Internet, il suffit en effet de s'identifier et de s'authentifier directement au moyen de la carte matricielle ou de la calculette.

Validité du concept de tri thérapie

Il s'agit de montrer que seule la combinaison des trois mesures permet de répondre à l'objectif fixé.

Commençons par préciser pour chaque mesure ce qu'elle apporte de fondamental :
- le brouillage empêche l'écoute de la saisie clavier par une tâche espion qui s'exécuterait secrètement sur le PC de l'utilisateur,
- le gestionnaire de certificat empêche l'intermédiation dolosive ainsi que l'extorsion de secrets par mystification (mots de passe et réponses à challenges) auprès de l'utilisateur sans qu'il puisse s'en douter,
- la carte matricielle (et a fortiori la calculette) empêche l'usurpation d'identité même en cas d'extorsions répétées de secrets auprès de l'utilisateur.

Le brouillage seul ne suffit évidemment pas puisqu'il suffit de mettre en oeuvre une intermédiation dolosive pour extorquer le mot de passe de l'utilisateur sans qu'il puisse s'en douter.

Le gestionnaire de certificat n'a que très peu d'intérêt si on ne l'associe pas au brouillage. En effet, il suffirait sinon d'écouter la saisie des secrets via le clavier sans avoir besoin de mystifier l'utilisateur.

La carte matricielle, de même que la calculette, ne résistent pas à une intermédiation dolosive à la volée.

Il suffit de mystifier l'utilisateur une seule fois pour contrer le gestionnaire de certificat même associé au brouillage. Or on ne peut pas attendre de l'utilisateur qu'il fasse preuve d'une vigilance à toute épreuve.

En revanche, la combinaison des trois mesures permet d'arriver à une solution d'authentification raisonnablement forte avec la carte matricielle et véritablement forte avec la calculette.

La combinaison optimale des trois mesures se traduit concrètement par le fait que le titulaire du certificat n'est plus authentifié au moyen d'un mot de passe statique mais en réponse à un challenge aléatoire. Dans ce cadre, il n'est plus utile d'afficher sous forme graphique un aléa que l'utilisateur doit saisir pour confirmer sa qualité d'être humain, il suffit :
- de remplacer cet aléa par le challenge, à afficher de même sous forme graphique,
- de demander à l'utilisateur de saisir non pas le challenge mais la réponse au challenge.

On détaillera successivement les trois moyens complémentaires devant être combinés pour résister efficacement aux dangers de l'Internet :
1) Mise en oeuvre d'un brouillage de la saisie clavier,
2) Mise en oeuvre d'un certificat via un gestionnaire de certificat et un tiers de confiance,
3) Mise en oeuvre d'une carte matricielle et d'un mot de passe.

### 1) Mise en oeuvre d'un brouillage de la saisie clavier

### Introduction

Des attaques ont récemment été menées avec succès pour récupérer des mots de passe :
- directement sur le PC de l'utilisateur,
- par le biais d'un cheval de Troie qui s'active dès que l'utilisateur se connecte sur un site de banque à domicile, le cheval de Troie captant alors la saisie clavier, donc le mot de passe, avec au besoin des prises d'image de l'écran
- avec ensuite envoi de ces données à la base arrière du pirate ou « hacker » qui n'a plus qu'à interpréter les données captées pour enfin usurper l'identité de la victime en se connectant sur le site de banque à domicile en question à sa place.

On remarque que c'est une attaque de nature différente de celles du type « phishing » qui consiste à inciter l'utilisateur à divulguer son mot de passe à un site se faisant typiquement passer pour celui de sa banque.

Dans la présente description détaillée, nous ne traiterons directement que du premier type d'attaque.

### Concept de brouillage

Quand on simule une frappe clavier, cela provoque un événement Windows comme si la frappe était réelle, sans possibilité de savoir si la frappe est réelle ou simulée.

Le système d'exploitation Windows va router cet événement à la tâche gérant la fenêtre active.

Mais la tâche en question n'est pas nécessairement active et il peut y avoir d'autres évènements qu'elle doit traiter au préalable ; en tout état de cause, la prise en compte de l'événement « frappe clavier » n'est pas instantanée, le délai dépendant par exemple de la charge machine.

Une tâche s'exécutant en « background ou arrière plan et qui cherche à espionner l'utilisateur en captant la saisie effectuée sur le clavier et notamment des mots de passe, peut sans doute avoir accès aux événements système, non seulement les frappes signalées mais aussi les événements en attente.

C'est pourquoi il faut éviter qu'il n'y ait qu'un seul événement « frappe clavier » en cours puisque dans ce cas, c'est certainement qu'il correspond à une frappe simulée. D'où la possibilité pour une tâche espion de détecter les frappes réelles et ainsi contrer le brouillage que constituent les frappes simulées.

On décrira plus tard dans la présente description l'algorithme du brouillage :
- d'abord dans une version simplifiée avec une seule frappe simulée,
- puis dans une version complétée avec un nombre aléatoire de frappes simulées.

Peut-être n'est-il pas suffisant d'agir au niveau des événements de type Windows s'il est possible de capter directement les interruptions matérielles générées par une frappe clavier ; dans ce cas, il faut pour davantage de sécurité simuler directement des interruptions et non pas des événements de type Windows. Mais le concept reste le même.

L'idée du brouillage est donc de simuler une rafale de frappes du clavier numérique, de récupérer les frappes signalées par le système d'exploitation, simulées ou réelles et de détecter les intrus qui sont donc les frappes réelles constituant un mot de passe.

De ce fait, une tâche espion ne pourra pas faire la part des choses entre frappes simulées et réelles, ne connaissant pas la séquence des frappes simulées, et de ce fait ne pourra pas intercepter la saisie du mot de passe.

A noter que la séquence de frappes simulées devra être aléatoire pour éviter que l'espion puisse la déduire par observations successives de saisies de mots de passe.

### Mise en oeuvre

Même si un tel brouillage est efficace, c'est à dire qu'il empêche l'écoute de la saisie clavier d'un mot de passe, encore faut-il que le brouillage soit effectivement mis en oeuvre.

Or un pirate ou « hacker » peut tenter d'obtenir le mot de passe par « phishing », ce que le brouillage n'empêche pas : d'une part, parce que le pirate ou « hacker » ne mettra pas en oeuvre le brouillage et d'autre part, parce que même s'il le fait, le mot de passe risque de lui être communiqué innocemment par l'utilisateur.

Autrement dit, pour que le brouillage apporte une valeur ajoutée optimale, il faut arriver à combiner cette mesure avec des mesures résistant aux tentatives de « phishing », évitant donc :
- la possibilité de rejouer l'authentification, d'où la nécessité d'une authentification dynamique,
- le risque d'intermédiation entre l'utilisateur et le site visé, typiquement de banque à domicile, d'où la nécessité d'une session de type SSLV3 / TLS avec certificat client et identification par le site basée sur le contenu de ce certificat.

Le certificat est protégé localement par un mot de passe : le brouillage doit donc permettre la saisie sécurisée de ce mot de passe.

Cola permet de se contenter d'un certificat logiciel ou d'un certificat matériel sans dispositif de saisie sécurisé du mot de passe.

```
Algorithme simplifié de brouillage
         initialisation du générateur aléatoire
         indice = 0
        L1 : tirage d'un aléa modulo 10 : alea
         simulation de la frappe correspondante du clavier
         numérique
        L2 : attente événement
         si « frappe clavier numérique » alors
          PIN[indice] = frappe signalée
         si <> alea alors
              indice += 1
              aller à L2
         sinon aller à L1
        si « validation » alors retour PIN
        aller à L2
```

On notera qu'il n'y a à tout instant qu'une seule frappe simulée, ce qui permet trop facilement de détecter les frappes réelles, d'où la nécessité en pratique de l'algorithme complété.

```
        Algorithme complété de brouillage
        initialisation du générateur aléatoire
        indice1 = 0
        premier = 0
        dernier = 0
        L1 : tirage d'un aléa modulo 10 : alea2
        Indice2 = 0
        L2 : si indice2 < alea2 + 5 alors
         tirage d'un aléa modulo 10 : alea1
         simulation de la frappe correspondante du clavier
         numérique
         ajouter (alea1)
         indice2 += 1
         aller à L2
        L3 : si indice2 > 0 alors
         Attente événement
         si « frappe clavier numérique » alors
              PIN[indice1] = frappe signalée
              si <> premier->aleal alors
                    indicel += 1
              sinon
                    enlever()
                    indice2 -= 1
         si « validation » alors retour PIN
         aller à L3
        aller à L1
```

On notera qu'il faut gérer la liste des frappes simulées :
- cette liste chaînée avant - arrière est en fait une file d'attente
- le début de la liste est repéré par la variable «premier» et le dernier élément de la liste est repéré par la variable « dernier »
- un élément de la liste comprend un champ « alea1 » et deux pointeurs : « derrière » et « devant »
- on aura deux méthodes pour ajouter un élément en fin de liste, « ajouter (frappe simulée) », et pour en enlever le premier, « enlever() »
- cette liste n'est jamais vide au moment où une frappe est signalée (d'où la possibilité d'accéder à « premier->alea1» sans avoir à gérer le cas où « premier » est le pointeur nul)

On notera qu'il s'agit d'une boucle active, ce qui n'est pas gênant car même si on sature la puissance de traitement de la machine, le système d'exploitation ne bloque pas pour autant les autres tâches.

### 2) Mise en oeuvre d'un certificat via un gestionnaire de certificat et un tiers de confiance,

Le problème technique à résoudre à présent consiste à éviter dans toute la mesure du possible qu'un mot de passe puisse être obtenu par un pirate ou « hacker » à l'insu d'un utilisateur et ceci sans utiliser de matériel autre que ce qui est présent habituellement sur un ordinateur individuel (typiquement un PC sous le système d'exploitation Windows).

L'objectif est donc d'y parvenir sans utiliser de clavier protégé et sans mettre en oeuvre un dispositif matériel de type carte à puce.

Il y a trois menaces principales contre lesquelles il faut protéger l'utilisateur :
l'écoute de la saisie du mot de passe sur le clavier ordinaire du PC,
la divulgation involontaire du mot de passe par l'utilisateur croyant le communiquer à un logiciel légitime,
le test systématique de l'ensemble des valeurs possibles du mot de passe.

### Description de la solution

Pour protéger contre l'écoute, la solution consiste à mettre en oeuvre le concept de brouillage par tout logiciel légitime ainsi qu'on l'a décrit en détails ci-dessus.

Pour protéger contre un logiciel espion, la solution consiste à s'appuyer sur un serveur « tiers de confiance » selon les orientations suivantes :
- le mot de passe ne sert qu'à vérifier qu'on est en présence du titulaire d'un certificat ; le certificat étant utilisé pour établir des sessions sécurisées de bout en bout, pour la signature électronique et éventuellement aussi pour du chiffrement,
- toute utilisation de la clé privée du certificat implique au préalable que soit vérifié le mot de passe,
- le mot de passe est vérifié par le serveur « tiers de confiance » et non pas localement,
- l'utilisateur ne saisit le mot de passe que s'il a reconnu ce serveur unique.

La solution consiste à remplacer le contrôle d'accès par utilisation d'un identifiant et d'un mot de passe par un contrôle d'accès par certificat. Mais disposer du certificat ne suffit pas, il faut en plus s'assurer qu'on est bien en présence du titulaire du certificat, ce qui passe typiquement par l'utilisation d'un mot de passe.

On ne traite donc le problème que dans un cas particulier, sachant néanmoins que cela suffit pour répondre à tous les besoins d'authentification à distance à partir d'un PC.

Appelons « gestionnaire de certificat » le logiciel qui gère le certificat selon ces orientations. On note que ce logiciel sera installé sur le PC ou en tout cas personnalisé au moment de l'installation du certificat. Il s'agit soit d'un «magasin à certificat » à part entière soit seulement d'une extension du magasin à certificat standard de type Windows (un peu à l'image d'un certificat sur carte à puce qui peut être reconnu par le magasin à certificats de type Windows).

Le serveur « tiers de confiance » est bien entendu un service lié à l'activité d'Autorité de Certification (entité qui fournit les certificats aux utilisateurs).

### Détail de la logique de traitement du gestionnaire de certificat

En préalable à toute utilisation de la clé privée du certificat, le gestionnaire de certificat va donc vérifier que la demande émane bien du titulaire du certificat et dans ce but, il va mettre en oeuvre les étapes de traitement suivantes :
- ouverture d'une fenêtre d'interaction avec l'utilisateur
- établissement d'une session, notamment de type TLS, avec reconnaissance mutuelle du serveur « tiers de confiance » et du client représenté par son certificat
- affichage dans la fenêtre de la date, de l'heure et du lieu de la dernière utilisation du certificat (données fournies par le serveur, sachant que lors de l'installation du gestionnaire de certificat, celui-ci mémorise le nom de la machine, ce nom étant fourni au serveur à toute demande d'authentification du titulaire du certificat)
- instruction rappelée à l'utilisateur qu'il ne devra saisir le mot de passe qu'après vérification de la conformité du certificat du serveur et des données relatives à la dernière utilisation de son certificat
- activation du brouillage et affichage sous forme graphique d'un code aléatoire que l'utilisateur doit saisir pour démontrer sa qualité d'être humain
- lecture sous brouillage du code et du mot de passe (la saisie du code suppose d'être capable d'interpréter le code dans sa forme graphique)
- désactivation du brouillage
- si le code saisi est le bon, remontée au serveur du mot de passe pour vérification (le serveur gère une base de donnée des certificats, des mots de passe liés aux différents certificat et contenant des statistiques d'utilisation des certificats).

Lorsque le serveur répond positivement à une telle demande d'authentification émanent du gestionnaire de certificat, celui-ci peut enchaîner en fonction de l'utilisation en question du certificat. Les utilisations peuvent être classées en deux catégories :
- utilisations de gestion du certificat (dont exportation du certificat),
- utilisations fonctionnelles (authentification, signature électronique, chiffrement).

On notera que le gestionnaire de certificat vérifie à chaque lancement qu'il s'exécute bien sur la machine sur laquelle il a été installé.

Pour protéger contre le test systématique de l'ensemble des valeurs possibles du mot de passe, le serveur « tiers de confiance » bloque le certificat après un certain nombre de tentatives d'affilé d'authentification avec mot de passe erroné (en principe de trois).

### Démonstration de validité de la solution par rapport au problème posé

Cette démonstration tient en quatre points :
- le mot de passe est saisi sous brouillage et ne peut donc pas être écouté par un cheval de Troie s'exécutant en cachette sur le PC de l'utilisateur,
- le mot de passe n'est transmis au serveur « tiers de confiance » que via une session sécurisée directe grâce à l'utilisation d'un certificat client en plus du certificat serveur et ne peut donc pas être intercepté selon un scénario de type « man in the middle »,

- la force brute par test de l'ensemble des valeurs possibles d'un mot de passe est empêchée par le serveur de « tiers de confiance » qui est la seule entité en dehors du titulaire du certificat à connaître le mot de passe (blocage du certificat après trois mots de passe erronés),
- en faisant preuve de vigilante, l'utilisateur peut empêcher la compromission de son mot de passe (reconnaissance du serveur « tiers de confiance » sur la base du certificat serveur et des données relatives à la dernière utilisation du certificat), et au pire se douter de la compromission de son certificat (par un logiciel espion substitué au gestionnaire de certificat) sachant que l'opération initiée ne peut pas aboutir sans au minimum laisser apparaître des anomalies.

On notera que le certificat n'est utilisable que via le gestionnaire de certificat ou par celui-ci. C'est pourquoi, il est possible d'exiger un mot de passe pour toute utilisation externe donc via le gestionnaire de certificat alors que celui-ci peut s'en passer pour l'utilisation interne liée à la vérification du mot de passe par le serveur « tiers de confiance ».

On constate enfin que, même avec la connaissance du mot de passe, l'usurpation d'identité n'est possible qu'en prenant personnellement le contrôle du PC où est installé le certificat de l'utilisateur, soit physiquement soit à distance.

### 3) Mise en oeuvre d'une carte matricielle et d'un mot de passe.

### Objectif de la carte matricielle

L'objectif est d'empêcher l'usurpation d'identité même en cas d'extorsions répétées de secrets auprès de l'utilisateur, titulaire de la carte matricielle, et ceci sans utiliser de matériel autre que ce qui est disponible en standard sur un PC.

### Description générale de la carte matricielle

A une carte matricielle est associée un mot de passe pour protéger l'utilisateur en cas de vol, de perte ou de copie des secrets de la carte matricielle et avant blocage ou mise en opposition de la carte matricielle.

A un challenge aléatoire, émis par un « tiers de confiance », l'utilisateur doit déduire des secrets inscrits sur sa carte matricielle la réponse à fournir, sachant qu'il doit compléter la réponse par son mot de passe.

Sur la carte matricielle, typiquement émise par une banque, on trouvera en plus des secrets, un identifiant, éventuellement une date d'expiration et d'autres informations dont le numéro d'appel d'un service d'assistance et de mise en opposition. On a représenté ci-dessous un exemple de matrice :

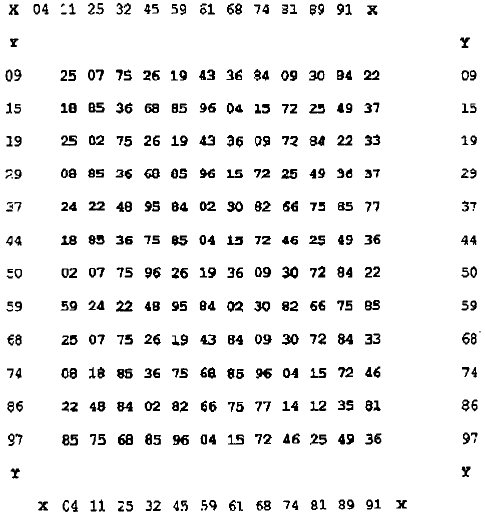

L'identifiant doit être communiqué au tiers de confiance pour qu'il puisse vérifier le mot de passe et la réponse par rapport au challenge.

### Validité du concept de carte matricielle

Les secrets sont constitués d'une part du mot de passe, non inscrit sur la carte matricielle et communiqué de façon indépendante à l'utilisateur, et d'autre part de codes en entrée et en sortie :
- les challenges renseignés en entrée, donnée X + donnée Y,
- les réponses en sortie, à l'intersection des colonnes X et des lignes Y.

Le principe est que, même si une partie des secrets a été extorquée à l'utilisateur, dont sans doute le mot de passe qui est le secret le plus vulnérable, la probabilité pour un fraudeur de disposer de la réponse (et du mot de passe) correspondant à un challenge aléatoire reste faible.

Cela suppose bien entendu que le tiers de confiance limite le nombre de tentatives qu'il est possible d'engager avant blocage de la carte matricielle.

Mais si la menace principale vert de l'Internet, il faut aussi pouvoir résister au vol, à la perte ou à la copie des secrets de la carte matricielle, d'où le mot de passe en complément de la carte matricielle.

Le risque que puisse se combiner le vol des secrets de la carte matricielle et l'extorsion du mot de passe auprès de l'utilisateur est d'un ordre de grandeur inférieur à chacun des deux risques pris un par un.

Enfin, pour se dégager de toute responsabilité ultérieure, l'utilisateur aura la consigne de mettre sa carte matricielle en opposition dès qu'il s'aperçoit directement ou indirectement que les secrets de sa carte matricielle ont été compromis.

### Optimisations

Le nombre et la richosse des secrets qu'il est possible d'inscrire sur une carte étant limités, il est possible de démultiplier le nombre effectif de secrets en procédant à deux passes de challenge / réponse.

Enfin, pour rendre l'extorsion par mystification des secrets auprès de l'utilisateur plus difficile, il est possible de ne renseigner qu'une partie des challenges théoriquement valides. De cette façon, l'utilisateur pourra se douter qu'il y a tentative de mystification lorsqu'on le sollicite pour un challenge non renseigné.

### Exemple d'utilisation

Après avoir communiqué son identifiant, « 421 20019K » (correspondant à l'agence et au compte principal de l'utilisateur dans un établissement bancaire déterminé), l'utilisateur reçoit le challenge « 59378115 ».

Il s'agit d'un double challenge :
- d'abord X = 59 et Y = 37
- ensuite X = 81 et Y = 15.

L'utilisateur regarde sa carte matricielle, celle présentée à titre d'exemple ci-dessus, et il construit la réponse en trois temps :
- d'abord, la réponse au premier challenge élémentaire 02,
- ensuite, celle du second challenge élémentaire : 25,
- enfin, son mot de passe : 1234.

Il transmet donc « 02251234 » au tiers de confiance qui trouve que c'est bien la bonne réponse.

## Revendications

1. Procédé de sécurisation des transactions effectuées à distance sur un réseau de communication ouvert par un utilisateur disposant d'un équipement informatique; le procédé comprenant :
- une étape de brouillage d'informations saisies par l'utilisateur au moyen du clavier de l'équipement informatique,
- une étape d'authentification de l'utilisateur auprès d'un serveur distant au moyen d'un module logiciel gestionnaire de certificat,
- une étape de mise en oeuvre d'un mot de passe dynamique, le procédé étant **caractérisé en ce que** l'étape de brouillage d'informations saisies par l'utilisateur au moyen du clavier de l'équipement informatique comprend :
- l'étape de simuler des séquences de frappes du clavier au sein de l'équipement informatique,
- l'étape, de recevoir une séquence de frappe du clavier correspondant à un mot de passe personnel, effectuée par l'utilisateur
- l'étape de détecter le mot de passe personnel en discriminant entre les séquences de frappe du clavier simulées et la séquence de frappe du clavier correspondant au mot de passe personnel de l'utilisateur.

2. Procédé de sécurisation selon la revendication 1, **caractérisé en ce que** l'étape d'authentification de l'utilisateur auprès d'un serveur distant comprend, pour le module logiciel gestionnaire de certificat:
- l'étape d'afficher une fenêtre active sur un écran de visualisation ce l'équipement informatique,
- l'étape d'établir une session sécurisée, notamment de type TLS, destinée à permettre une identification mutuelle du serveur distant et de l'utilisateur, représenté par un certificat,
- l'étape d'activer l'étape de brouillage d'informations saisies par l'utilisateur au moyen du clavier de l'équipement informatique et d'afficher, sous forme graphique, un code aléatoire destiné à être saisi par l'utilisateur pour démontrer sa qualité d'être humain ; le procédé étant tel que l'étape d'authentification de l'utilisateur auprès d'un serveur distant comprend en outre :
- l'étape, de recevoir le code aléatoire ainsi affiché et de saisir le code aléatoire et le mot de passe personnel par l'utilisateur, au moyen du clavier de l'équipement informatique,
- l'étape, pour le module logiciel gestionnaire de certificat, de désactiver l'étape de brouillage,
- l'étape, pour le module logiciel gestionnaire de certificat, de vérifier la validité du code aléatoire et de transmettre au serveur distant le mot de passe personnel,
- l'étape, pour le serveur distant, de comparer le mot de passe personnel ainsi transmis avec le mot de passe correspondant au certificat de l'utilisateur mémorisé dans une base de données de certificat associée au serveur distant.

3. Procédé de sécurisation selon la revendication 2 **caractérisé en ce que** l'étape d'authentificalion de l'utilisateur auprès d'un serveur distant comprend pour le module logiciel gestionnaire de certificats :
- l'étape d'afficher des données dans la fenêtre active, notamment la date, l'heure et le lieu de la dernière utilisation du certificat, les données étant communiquées par le serveur.

4. Procédé de sécurisation selon l'une des revendications 1 à 3, **caractérisé en ce que** l'étape de mise en oeuvre d'un mot de passe dynamique comprend :
- l'étape, pour l'utilisateur, de communiquer au serveur distant un identifiant, notamment de type alphanumérique,
- l'étape, pour le serveur distant, de communiquer à l'utilisateur un défi,
- l'étape, pour l'utilisateur, de déterminer une réponse au défi,
- l'étape, pour l'utilisateur, de transmettre au serveur distant la réponse ainsi déterminée et le mot de passe personnel,
- l'étape, pour le serveur distant, de comparer le mot de passe personnel ainsi transmis avec le mot de passe mémorisé dans la base de données et de contrôler la réponse associée à l'identifiant et mémorisée dans la base de données.

5. Procédé de sécurisation selon l'une des revendications 1 à 4, **caractérisé en ce que** le mot de passe dynamique est déterminé au moyen d'une carte matricielle d'authentification.

6. Procédé de sécurisation selon l'une des revendications précédentes, **caractérisé en ce que** le mot de passe dynamique est déterminé au moyen d'une calculette fonctionnant en mode challenge/réponse.

7. Procédé de sécurisation selon la revendication 6, **caractérisé en ce que** la calculette est autonome ou fonctionne en association avec une carte à puce contenant les données de personnalisation relatives à l'utilisateur, notamment les secrets nécessaires au contrôle du mot de passe et à la génération de la réponse au challenge.

## Patentansprüche

1. Verfahren zur Sicherung von in einem offenen Kommunikationsnetz von einem über eine EDV-Ausrüstung verfügenden Benutzer ausgeführten Ferntransaktionen, wobei das Verfahren enthält:
- einen Schritt der Verzerrung von vom Benutzer mittels der Tastatur der EDV-Ausrüstung eingegebenen Informationen,
- einen Schritt der Authentifizierung des Benutzers bei einem fernen Server mittels eines Zertifikat-Manager-Softwaremoduls,
- einen Schritt der Anwendung eines dynamischen Passworts,
wobei das Verfahren **dadurch gekennzeichnet ist, dass** der Schritt der Verzerrung von vom Benutzer mittels der Tastatur der EDV-Ausrüstung eingegebenen Informationen enthält:
- den Schritt der Simulation von Folgen von Tastaturanschlägen innerhalb der EDV-Ausrüstung,
- den Schritt des Empfangs einer vom Benutzer ausgeführten Tastaturanschlagfolge entsprechend einem persönlichen Passwort,
- den Schritt der Erfassung des persönlichen Passworts durch Unterscheidung zwischen den simulierten Folgen von Tastaturanschlägen und der Tastaturanschlagfolge entsprechend dem persönlichen Passwort des Benutzers.

2. Sicherungsverfahren nach Anspruch 1, **dadurch gekennzeichnet, dass** der Schritt der Authentifizierung des Benutzers bei einem fernen Server für das Zertifikat-Manager-Softwaremodul enthält:
- den Schritt der Anzeige eines aktiven Fensters auf einem Anzeigebildschirm der EDV-Ausrüstung,
- den Schritt des Aufbaus einer gesicherten Sitzung, insbesondere von der Art TLS, die dazu bestimmt ist, eine gegenseitige Identifikation des fernen Servers und des Benutzers zu erlauben, der durch ein Zertifikat repräsentiert wird,
- den Schritt der Aktivierung des Schritts der Verzerrung von vom Benutzer mittels der Tastatur eingegebenen Informationen und der Anzeige, in grafischer Form, eines Zufallscodes, der dazu bestimmt ist, vom Benutzer eingegeben zu werden, um seine Eigenschaft als menschliches Wesen zu beweisen; wobei das Verfahren derart ist, dass der Schritt der Authentifizierung des Benutzers bei einem fernen Server weiter enthält:
- den Schritt des Empfangs des so angezeigten Zufallscodes und der Eingabe des Zufallscodes und des persönlichen Passworts durch den Benutzer mittels der Tastatur der EDV-Ausrüstung,
- den Schritt, für das Zertifikat-Manager-Softwaremodul, der Deaktivierung des Verzerrungsschritts,
- den Schritt, für das Zertifikat-Manager-Softwaremodul, der Überprüfung der Gültigkeit des Zufallscodes und der Übertragung des persönlichen Passworts an den fernen Server,
- den Schritt, für den fernen Server, des Vergleichs des so übertragenen persönlichen Passworts mit dem dem in einer dem fernen Server zugeordneten Zertifikat-Datenbank gespeicherten Zertifikat des Benutzers entsprechenden Passwort.

3. Sicherungsverfahren nach Anspruch 2, **dadurch gekennzeichnet, dass** der Schritt der Authentifizierung des Benutzers bei einem fernen Server für das Zertifikat-Manager-Softwaremodul enthält:
- den Schritt der Anzeige der Daten im aktiven Fenster, insbesondere das Datum, die Uhrzeit und der Ort der letzten Benutzung des Zertifikats, wobei die Daten vom Server mitgeteilt werden.

4. Sicherungsverfahren nach einem der Ansprüche 1 bis 3, **dadurch gekennzeichnet, dass** der Schritt der Anwendung eines dynamischen Passworts enthält:
- den Schritt, für den Benutzer, der Mitteilung einer Kennung, insbesondere vom alphanumerischen Typ, an den fernen Server,
- den Schritt, für den fernen Server, der Mitteilung einer Sicherheitsabfrage an den Benutzer,
- den Schritt, für den Benutzer, der Bestimmung einer Antwort auf die Sicherheitsabfrage,
- den Schritt, für den Benutzer, der Übertragung der so bestimmten Antwort und des persönlichen Passworts an den fernen Server,
- den Schritt, für den fernen Server, des Vergleichs des so übertragenen persönlichen Passworts mit dem in der Datenbank gespeicherten Passwort und der Prüfung der der Kennung zugeordneten und in der Datenbank gespeicherten Antwort.

5. Sicherungsverfahren nach einem der Ansprüche 1 bis 4, **dadurch gekennzeichnet, dass** das dynamische Passwort mittels einer Authentifizierungs-Matrixkarte bestimmt wird.

6. Sicherungsverfahren nach einem der vorhergehenden Ansprüche, **dadurch gekennzeichnet, dass** das dynamische Passwort mittels eines Taschenrechners bestimmt wird, der im Sicherheitsabfrage/Antwort-Modus arbeitet.

7. Sicherungsverfahren nach Anspruch 6, **dadurch gekennzeichnet, dass** der Taschenrechner autonom ist oder mit einer Chipkarte zusammenarbeitet, die die Personalisierungsdaten bezüglich des Benutzers enthält, insbesondere die zur Überprüfung des Passworts und zur Erzeugung der Antwort auf die Sicherheitsabfrage notwendigen Geheimnisse.

## Claims

1. Method for providing security for transactions made remotely over an open communication network by a user having an item of information-technology equipment; the method comprising:
- a step of scrambling items of information entered by the user by means of the keyboard of the item of information-technology equipment,
- a step of authenticating the user with a remote server by means of a certificate-managing software module,
- a step of using a dynamic password, the method being **characterized in that** the step of scrambling items of information entered by the user by means of the keyboard of the item of information-technology equipment comprises:
- the step of simulating sequences of keystrokes within the item of information-technology equipment,
- the step of receiving a sequence of keystrokes, corresponding to a personal password, carried out by the user,
- the step of detecting the personal password by discriminating between the simulated sequences of keystrokes and the sequence of keystrokes corresponding to the personal password of the user.

2. Method for providing security according to Claim 1, **characterized in that** the step of authenticating the user with a remote server comprises, for the certificate-managing software module:
- the step of displaying an active window on a display screen of the item of information-technology equipment,
- the step of establishing a secure session, notably of the TLS type, designed to allow a mutual identification of the remote server and of the user, represented by a certificate,
- the step of activating the step of scrambling items of information entered by the user by means of the keyboard of the item of information-technology equipment and of displaying, in graphic form, a random code designed to be entered by the user to demonstrate that he is a human being; the method being such that the step of authenticating the user with a remote server also comprises:
- the step of receiving the random code thus displayed and of entering the random code and the personal password by the user by means of the keyboard of the item of information-technology equipment,
- the step, for the certificate-managing software module, of deactivating the scrambling step,
- the step, for the certificate-managing software module, of verifying the validity of the random code and of transmitting the personal password to the remote server,
- the step, for the remote server, of comparing the personal password thus transmitted with the password corresponding to the certificate of the user stored in a certificate database associated with the remote server.

3. Method for providing security according to Claim 2, **characterized in that** the step of authenticating the user with a remote server, comprises, for the certificate-managing software module:
- the step of displaying data in the active window, notably the date, the time and the place of the last use of the certificate, the data being communicated by the server.

4. Method for providing security according to one of Claims 1 to 3, **characterized in that** the step of applying a dynamic password comprises:
- the step, for the user, of communicating to the remote server an identifier, notably of the alpha numeric type,
- the step, for the remote server, of communicating a challenge to the user,
- the step, for the user, of determining a response to the challenge,
- the step, for the user, of transmitting to the remote server the response thus determined and the personal password,
- the step, for the remote server, of comparing the personal password thus transmitted with the password stored in the database and of checking the response associated with the identifier and stored in the database.

5. Method for providing security according to one of Claims 1 to 4, **characterized in that** the dynamic password is determined by means of an authentication matrix card.

6. Method for providing security according to one of the preceding claims, **characterized in that** the dynamic password is determined by means of a pocket calculator operating in challenge/response mode.

7. Method for providing security according to Claim 6, **characterized in that** the pocket calculator is standalone or operates in association with a smart card containing the personalization data relating to the user, notably the secrets necessary for checking the password and for generating the response to the challenge.
